(19) Europäisches Patentamt / European Patent Office / Office européen des brevets

(11) **EP 3 082 273 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(21) Anmeldenummer: **15001141.9**

(22) Anmeldetag: **18.04.2015**

(51) Internationale Patentklassifikation (IPC):
**H04B 7/08** (2006.01)

(52) Gemeinsame Patentklassifikation (CPC):
**G01S 7/023; G01S 3/043; G01S 13/42; H01Q 3/28; H01Q 3/36; H01Q 21/22; H04B 7/084;**
G01S 7/2886; G01S 7/358

(54) **VERFAHREN UND VORRICHTUNG ZUR REDUKTION VON KORRELIERTEN STÖRSIGNALEN IN MEHRKANAL-EMPFÄNGERSYSTEMEN MIT DIGITALER STRAHLFORMUNG**

METHOD AND DEVICE FOR REDUCTION OF CORRELATED INTERFERENCE IN MULTICHANNEL RECEIVER SYSTEMS CORRELATED WITH DIGITAL BEAM FORMING

PROCÉDÉ ET DISPOSITIF DE RÉDUCTION DE SIGNAUX PARASITES CORRÉLÉS DANS DES SYSTÈMES DE RÉCEPTION MULTI-CANAUX À FORMATION DE FAISCEAU NUMÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.10.2016 Patentblatt 2016/42**

(73) Patentinhaber: **HENSOLDT Sensors GmbH 82024 Taufkirchen (DE)**

(72) Erfinder:
• **Schuster, Thomas 89075 Ulm (DE)**
• **Schneider, Robert 88483 Burgrieden (DE)**

(74) Vertreter: **LifeTech IP Spies & Behrndt Patentanwälte PartG mbB Elsenheimerstraße 47a 80687 München (DE)**

(56) Entgegenhaltungen:
EP-A1- 1 233 542    DE-T2- 69 932 350

• RABINKIN DANIEL ET AL: "Front-end non-linear distortion and array beamforming", 2015 IEEE RADIO AND WIRELESS SYMPOSIUM (RWS), IEEE, 25. Januar 2015 (2015-01-25), Seiten 35-37, XP032787625, DOI: 10.1109/RWS.2015.7129730 [gefunden am 2015-06-19]

• RABIDEAU D J: "Hybrid mitigation of distortion in digital arrays", RADAR CONFERENCE, 2005 IEEE INTERNATIONAL ARLINGTON, VA, USA 9-12 MAY 2005, PISCATAWAY, NJ, USA,IEEE, 9. Mai 2005 (2005-05-09), Seiten 236-241, XP010801700, ISBN: 978-0-7803-8881-9

• HOWARD L C ET AL: "Mitigation of correlated non-linearities in digital phased arrays using channel-dependent phase shifts", 2003 IEEE MTT-S INTERNATIONAL MICROWAVE SYMPOSIUM DIGEST.(IMS 2003). PHILADELPHIA, PA, JUNE 8 - 13, 2003; [IEEE MTT-S INTERNATIONAL MICROWAVE SYMPOSIUM], NEW YORK, NY : IEEE, US, 8. Juni 2003 (2003-06-08), Seite 1525, XP032412537, DOI: 10.1109/MWSYM.2003.1210426 ISBN: 978-0-7803-7695-3

• KEIR C LAURITZEN ET AL: "Impact of Decorrelation Techniques on Sampling Noise in Radio-Frequency Applications", IEEE TRANSACTIONS ON INSTRUMENTATION AND MEASUREMENT, IEEE SERVICE CENTER, PISCATAWAY, NJ, US, Bd. 59, Nr. 9, 1. September 2010 (2010-09-01), Seiten 2272-2279, XP011300805, ISSN: 0018-9456

• William H Long ET AL: "CHAPTER 17 PULSE DOPPLER RADAR" In: "RADAR HANDBOOK (2nd Edition)", 1. Januar 1990 (1990-01-01), McGraw Hill, New York, NY, US, XP055216789, ISBN: 978-0-07-057913-2 Seiten 17.1-17.42, * Seite 17.12; Abbildung 17.8 *

**EP 3 082 273 B1**

**Beschreibung**

Die Erfindung betrifft ein Verfahren sowie Vorrichtung zur Reduktion von korreliert in den Empfangskanälen eines Mehrkanal-Empfängersystems mit Digitaler Strahlformung vorhandenen Störsignalen, sowie zur Entstörung eines damit verbundenen Guard-Kanals.

In verschiedenen Bereichen der Sensorik kommen Mehrkanal-Empfängersysteme zum Einsatz. Dazu zählen Bereiche wie Seismologie, Akustik, Ultraschallsensorik und Funk- und Radartechnik, um nur ein paar Beispiele zu nennen.

In modernen Systemen wird dabei immer öfter die Digitale Strahlformung (engl. Digital Beamforming, DBF) angewendet. Eine allgemeine Einführung zum Thema Digitale Strahlformung ist in Krim, Hamid, and Mats Viberg "Two decades of array signal processing research: the parametric approach". Signal Processing Magazine, IEEE 13.4 (1996): Seite 67-94 zu finden.

Zur Digitalen Strahlformung werden Empfangseinheiten (z.B. Mikrophone, Antennenelemente etc.) gewählt, die eine weit öffnende Empfangscharakteristik aufweisen. Typischerweise werden Empfangseinheiten in Gruppen (Arrays) mit Abständen im Bereich der halben Wellenlänge ($\lambda$ / 2) der zu empfangenden Strahlung angeordnet.

Das Signal jeder Empfangseinheit wird in einem individuellen Empfangskanal so transformiert, dass es sich zur Analog-Digital-Wandlung und digitalen Weiterverarbeitung eignet. Im Fall von Radar-Sensoren entspricht diese Signal-Transformation einem ein- oder mehrstufigen Mischprozess, der das Signal vom Nutzband ins Basisband transformiert.

Die digitalisierten Signale werden rechnerisch überlagert, wobei durch Vorfaktoren die Amplitude und Phase der einzelnen Kanäle beeinflusst werden.

Eine Amplitudenbelegung der einzelnen Kanäle über der Apertur, auch Taper-Funktion genannt (engl. aperture distribution), dient der Unterdrückung von Nebenkeulen. Eine Phasenbelegung der einzelnen Kanäle dient dem Formen und Schwenken einer gebündelten Empfangskeule.

Eindimensionale Arrays (Linienarrays oder 1D-Arrays) ermöglichen die Strahlschwenkung in einer Ebene, zweidimensionale Arrays (Flächenarrays oder 2D-Arrays) im gesamten Halbraum vor der Sensorapertur (bestehend aus den genannten Empfangseinheiten). Die Empfangselemente der Empfangseinheiten sind in der Regel nicht omnidirektional, so dass maximale Schwenkwinkel in einem Bereich von $\pm$ 45° bis $\pm$ 70° typisch sind.

Der Schwenkwinkel 0°, in der Regel die Hauptempfangsrichtung, entspricht einer einfachen kohärenten Summation der Signale aller Empfangskanäle mit gleicher Phase. Wenn nun durch Übersprechen aus anderen Baugruppen bzw. Bereichen (z.B. aus Lokaloszillator-Signalen, Prozessoren, Taktsignalen, Schaltnetzteilen, Welligkeiten der Versorgungsspannungen etc.) Störlinien oder korreliertes Rauschen des Sendesignals mit gleicher Phase in alle Empfangskanäle einkoppeln, dann überlagern sich diese im Strahl mit Schwenkwinkel 0° alle konstruktiv und werden im gleichen Maß wie das Nutzsignal durch die Summation digital verstärkt. Der erwünschte Gewinn an Signal-zu-Rausch-Verhältnis stellt sich für korrelierte Rauschanteile nicht ein.

In der Regel ist der ungeschwenkte Strahl (d.h. die Hauptempfangsrichtung) aber der Wichtigste, weil hier die Empfindlichkeit der Empfangseinheiten am Größten ist, und ein Sensor so angebracht wird, dass er die unmittelbar vor ihm liegende Szene mit maximaler Reichweite erfasst.

Verschiedene Möglichkeiten, um Verzerrungen durch Nichtlinearitäten in Empfängerkanälen zu verringern, sind zum Bespiel in DE 699 32 350 T2, Daniel Rabinkin et al.: "Front End Non-Linear Distortion and Array Beam Forming", Daniel J. Rabideau: "Hybrid Mitigation of Distortion in Digital Arrays" oder in Howard, L. C. et al. : Mitigation of Correlated Non-Linearities in Digital-Phased Arrays using Channel-Dependent Phase Shifts" beschrieben. Außerdem offenbart Keir C. Lauritzen et al.: "Impact of Decorrelation Techniques on Sampling Noise in Radio-Frequency Applications" Systeme zur Minimierung von Quantisierungsrauschen in AD Wandlern und in EP 1 233 542 A1 werden Phasen in Sendekanäle eingebracht, um die Kapazität eines Funknetzes zu erhöhen.

Es ist Aufgabe der Erfindung, ein Verfahren und eine Vorrichtung zu schaffen, die eine Reduktion der in den einzelnen Empfangskanälen vorhandenen korrelierten Störsignale (wie Rauschen und/oder einzelne Störlinien) ermöglichen.

Diese Aufgabe wird mit dem Verfahren gemäß Patentanspruch 1 sowie der Vorrichtung gemäß Patentanspruch 8 gelöst. Vorteilhafte Ausführungen der Erfindungen sind Gegenstand von Unteransprüchen.

Generell gibt es bei Mehrkanal-Empfängersystemen nach Anwendung des Digital Beamformings eine Richtcharakteristik mit einer Hauptempfangsrichtung, die oft, aber nicht notwendigerweise, unter 0° zum Lot auf der Apertur gewählt wird. Die Anordnung der Empfangseinheiten in der Apertur kann in einem 1D bzw. 2D-Array (d.h. Linienarray oder Flächenarray) erfolgen. Typische Anordnungen sind Rechtecks-Gitter-Strukturen, die in einer Ebene liegen, wobei eine solche regelmäßige Anordnung keine Voraussetzung für die vorliegende Erfindung ist. Die Empfangseinheiten können allgemein beliebig in einer Ebene oder auch auf einer beliebig geformten Fläche angeordnet sein. Typische und weit verbreitete Ausführungsformen der Apertur sind beispielsweise Gruppenantennen, Sonarantennen oder Mikrofonarrays. Einfallende Wellen aus der Hauptempfangsrichtung soll das Empfänger-Array mit maximaler Empfindlichkeit empfangen. Beim Digital Beamforming werden die Empfangskeulen typischerweise symmetrisch um die Hauptempfangsrichtung gebildet.

Das erfindungsgemäße Verfahren und Vorrichtung zur Reduktion von in den einzelnen Empfangskanälen korreliert vorliegenden Störsignalen, wie z.B. Rauschen und Störlinien, besteht nun darin, dass eine gezielte Vorformung der Richtcharakteristik (d.h. der Empfangskeule) des Mehrkanal-Empfängersystems in einen anderen Bereich von Einfallsrichtungen (im Folgenden als Empfangsbereich bezeichnet) vorgenommen wird. Dieser Empfangsbereich entspricht nicht mehr der Hauptempfangsrichtung größter Empfindlichkeit des Mehrkanal-Empfängersystems und wird durch Einbringung einer definierten Phasenverschiebung in die einzelnen Empfangskanäle zwischen Empfangseinheit und Empfänger erreicht. Anschließend wird im Digital Beamforming die vorgenommene Vorformung der Richtcharakteristik wieder rückgängig gemacht, wobei sich aufgrund der eingebrachten Phasenverschiebungen die korrelierten Störsignale der einzelnen Empfangskanäle in der Hauptempfangsrichtung des Mehrkanal-Empfängersystems maximal destruktiv überlagern. Dagegen ergibt sich in dem durch die Vorformung der Empfangscharakteristik erzeugten Empfangsbereich eine konstruktive Überlagerung der Störsignale. Diese Tatsache kann für die Korrektur eines in dem Mehrkanal-Empfängersystem vorhandenen Guard-Kanals vorteilhaft verwendet werden, wie weiter unten noch im Detail erläutert werden wird.

Das Mehrkanal-Empfängersystem umfasst mehrere Empfangskanäle, je Empfangskanal eine Empfangseinheit sowie einen Empfänger inkl. der zugehörigen Signalwege und einen Analog- / Digitalwandler (A/D), sowie für alle Empfangskanäle gemeinsam eine entsprechende Hardware zum Digital Beamforming (im Folgenden kurz als Verarbeitungseinheit bezeichnet).

Unter Digital Beamforming im Sinne der vorliegenden Erfindung sind auch spezielle Formen dieser Prozessierung wie z.B. Adaptive Beamforming (ABF) zu verstehen.

Eine Empfangseinheit kann ein einzelnes Empfangselement oder auch eine Mehrzahl von fest verschalteten Empfangselementen, z.B. Untergruppen (englisch: Sub-Array) einer Gruppenantenne umfassen.

Im allgemeinen Fall liegt ein Array aus i = 1,2...n beliebig angeordneten Empfangseinheiten vor. Die Positionen der Einheiten sind durch kartesische Koordinaten $x_i = x_1 \ldots x_n$, $y_i = y_1 \ldots y_n$ und $z_i = z_1 \ldots z_n$ definiert, beispielsweise aber nicht zwingend liegt eine gleichmäßige Anordnung der Empfangseinheiten in einer ebenen Rechtecks-Gitter-Struktur vor.

Die ankommenden Nutzsignale der einzelnen Empfangskanäle aus den n Empfangseinheiten werden nach dem erfindungsgemäßen Verfahren mit einer zusätzlichen Phasenverschiebung (d.h. Verzögerung) $\phi_i$ (i=1, 2, ... n) in den Signalleitungen vor dem Empfänger beaufschlagt. Die korrelierten Störsignale, insbesondere einzelne Störlinien (Spurious Signals, kurz Spurs) und / oder korreliertes Rauschen (Noise), koppeln gleichermaßen in die Empfänger ein und erfahren nicht die erfindungsgemäß eingebrachte Phasenverschiebung $\phi_i$.

Das in einem Empfangskanal nach dem Empfänger vorhandene Empfangssignal $S_i$ lässt sich wie folgt darstellen:

$$S_i = \exp(-j\phi_i)\, sig_i + spn \qquad (1)$$

wobei $sig_i$ das Nutzsignal des Empfangskanals $i$ und $spn$ die Störsignale (Spurs + Noise) sind. $j$ ist die imaginäre Einheit. Entscheidend ist, dass die Störsignale in allen Kanälen gleich sind. Diese Voraussetzung ist in der Praxis nicht ideal, aber bei vielen Systemen in guter Näherung erfüllt.

Es soll nun das Empfangsarray aus der Hauptempfangsrichtung, gekennzeichnet durch die uv-Koordinaten $(u_h, v_h)$ mit größter Empfindlichkeit, empfangen. Erfindungsgemäß sollen die Störsignale für diese Richtung bestmöglich unterdrückt werden.

uv-Koordinaten stellen eine in der Antennentechnik übliche Beschreibung einer Einfalls- oder Abstrahlrichtung dar (natürlich sind auch andere Koordinaten möglich). Es handelt sich hierbei um die Projektion eines Einheitsvektors, dessen Spitze auf jedem beliebigen Punkt einer Halbkugel liegen darf, in die Grundebene der Halbkugel.

Beim DBF wird eine Keule mit Empfangsrichtung $(u_h, v_h)$ durch folgende Berechnung geformt:

$$S_{uh,vh} = \sum_{i=1}^{n} \exp\big(jk_0(u_h x_i + v_h y_i + w_h z_i)\big) S_i \qquad (2)$$

wobei $k_0 = 2\pi/\lambda$ die Wellenzahl ist (mit der Wellenlänge $\lambda$ des empfangenen Trägersignals) und $w_h = \sqrt{1 - u_h^2 - v_h^2}$ . Hierbei wurde jedoch angenommen, dass die Signale $S_i$ noch keine zusätzlichen Phasenverschiebungen gemäß Gleichung (1) enthalten. Die Phasenverschiebung muss später durch einen entsprechenden Korrekturterm (konjugiert komplexer Phasenterm) in der DBF-Hardware wieder rechnerisch eliminiert werden, zusätzlich zu der Anwendung der für die Strahlschwenkung erforderlichen Phasenterme (letztere gemäß Gleichung 2).

Zur Unterdrückung von Nebenkeulen wird im Allgemeinen eine Taperfunktion angewendet, d.h. durch Vorfaktoren wird die Amplitude $A_i$ der einzelnen Empfangskanäle gezielt beeinflusst. Damit ergibt sich für die DBF-Empfangskeule der Hauptempfangsrichtung:

$$S_{uh,vh} = \sum_{i=1}^{n} A_i \exp\big(j k_0 (u_h x_i + v_h y_i + w_h z_i)\big) S_i \qquad (3)$$

Sollen nun die Signale aus Gleichung (1) eingesetzt werden, so müssen die erfindungsgemäß eingebrachten Phasenverschiebungen rechnerisch eliminiert werden, damit das DBF erwartungsgemäß funktioniert:

$$S_{uh,vh} = \sum_{i=1}^{n} A_i \exp\big(j k_0 (u_h x_i + v_h y_i + w_h z_i)\big) \ \underbrace{\exp(j\phi_i)}_{Korrekturterme} \ \big(\exp(-j\phi_i)\, sig_i + spn\big) \qquad (4)$$

Wird die letzte Klammer in Gleichung (4) ausmultipliziert, so heben sich wunschgemäß die eingebrachten Phasenverschiebungen aus den Signalleitungen mit den Korrekturtermen auf:

$$S_{uh,vh} = \underbrace{\sum_{i=1}^{n} A_i \exp\big(j k_0 (u_h x_i + v_h y_i + w_h z_i)\big)\, sig_i}_{Nutzsignal} \\ + \underbrace{\sum_{i=1}^{n} A_i \exp\big(j k_0 (u_h x_i + v_h y_i + w_h z_i)\big) \exp(j\phi_i) spn}_{St\ddot{o}rsignale} \qquad (5)$$

Da die Störungen im Idealfall in allen Kanälen gleich sind (die Variable $spn$ hat keinen Index i), werden sie eliminiert, indem ihr Vorfaktor $\sum_{i=1}^{n} A_i \exp\big(j k_0 (u_h x_i + v_h y_i + w_h z_i)\big) \exp(j\phi_i)$ minimiert oder im Idealfall zu null gesetzt wird. Auch wenn es in speziellen Fällen evtl. nicht möglich ist, den Vorfaktor null werden zu lassen, so kann trotzdem eine Wahl der Phasen $\phi_i$, die seinen Wert minimiert, die Störungen zumindest teilweise unterdrücken. Für die optimale Wahl der Phasen $\phi_i$ muss also gefordert werden:

$$\sum_{i=1}^{n} A_i \exp\big(j k_0 (u_h x_i + v_h y_i + w_h z_i)\big) \exp(j\phi_i) \overset{!}{=} 0 \qquad (6a)$$

$$\left| \sum_{i=1}^{n} A_i \exp\big(jk_0(u_h x_i + v_h y_i + w_h z_i)\big) \exp(j\phi_i) \right| \overset{!}{=} \min. \qquad (6b)$$

Je nach gewähltem Array und gewählter Hauptempfangsrichtung kann diese Gleichung analytisch oder zumindest numerisch gelöst werden.

Wenn als Hauptempfangsrichtung $u_h = 0$ und $v_h = 0$ gewählt wird (d.h. die Hauptempfangsrichtung ist senkrecht zur Empfangsapertur), und die Empfangseinheiten des Arrays liegen in der Ebene gekennzeichnet durch $z_i = 0$, vereinfacht sich Gleichung (6) erheblich:

$$\sum_{i=1}^{n} A_i \exp(j\phi_i) = 0 \qquad (7)$$

Ist nun beispielsweise die Amplitude $A_i$ konstant (d.h. keine Taper-Funktion), und die Anzahl der Empfangseinheiten gerade, so lässt sich die Bedingung erfüllen, indem man bei der Hälfte aller Empfangseinheiten $\phi_i = 0$ und bei der anderen Hälfte $\phi_i = \pi$ wählt, ganz gleich wo die Empfangseinheiten liegen.

Handelt es sich z.B. um ein Array mit symmetrischer Taper-Funktion, also $A_1 = A_n$, $A_2 = A_{n-1}$, ... usw., und die Anzahl der Einheiten ist ebenfalls gerade, dann erfüllt die Wahl $\phi_i = 0$ für ungeradzahliges $i$ und $\phi_i = \pi$ für geradzahliges $i$ ebenfalls die geforderte Bedingung, da die jeweils gleichen Amplituden einmal mit Vorfaktor 1 und einmal mit Vorfaktor -1 in der Gesamtsumme auftauchen. Da es allein auf die Differenz der beiden Phasen ankommt, gilt allgemein für $\phi_i$:

$\phi_i = \phi_1$ für ungeradzahliges i,

$\phi_i = \phi_2$, für geradzahliges i,

wobei gilt $\phi_1 - \phi_2 = \pm \pi$.

Die Phasenverschiebung wird in die Empfangskanäle eingebracht, z.B. durch unterschiedliche Signallaufzeiten in den Signalwegen vor den Empfängern, vorteilhaft durch eine entsprechende Geometrie der Signalwege und Länge der Signalkabel (sogenannte Umwegleitungen). Es können selbstverständlich auch alle sonstigen bekannten Techniken zur Erzeugung von Phasenverschiebungen angewandt werden, z.B. Phasenschieber basierend auf Signalreflexionen.

Die Einbringung der Phasenverschiebung, wie sie oben mathematisch definiert wurde, erfolgt, wie oben beschrieben, in den einzelnen Empfangskanälen zwischen Empfangseinheit und Empfänger. Die erfindungsgemäße Phasenverschiebung entspricht einer Vorformung der Empfangskeule des Mehrkanal-Empfängersystems in einen anderen Empfangsbereich (dies kann auch eine diskrete Empfangsrichtung sein). Ohne die erfindungsgemäße Korrektur der beschriebenen Phasenverschiebung im DBF würde das Array mit maximaler Empfindlichkeit aus diesem Empfangsbereich empfangen.

Während wie beschrieben, die korrelierten Störsignale der einzelnen Empfangskanäle in der Hauptempfangsrichtung des Mehrkanal-Empfängersystems sich maximal destruktiv überlagern, ergibt sich in der durch Vorformung erzeugten Richtung bzw. Empfangsbereich eine verstärkte konstruktive Überlagerung der Störsignale. Die Störsignale werden in der Hauptempfangsrichtung eliminiert und sind nur noch in dem anderen Empfangsbereich bzw. Richtung, der nicht der Hauptempfangsrichtung des Mehrkanal-Empfängers entspricht, vorhanden (diese Richtung wird im Folgenden auch als "Störrichtung" bezeichnet).

Dies ist aber in der Regel eine Richtung, in der ein Nutzsignal überhaupt nicht erwartet wird. Im oben geschilderten Beispiel gemäß Gleichung 7 steht diese Richtung gerade im rechten Winkel zur Hauptempfangsrichtung.

Somit bewirkt die Erfindung eine Reduktion der korrelierten Störsignale in der Hauptempfangsrichtung und deren Verstärkung in der durch die die Vorformung definierten Richtung, die aber für die Tauglichkeit des Mehrkanal-Empfangssystems ohne Bedeutung ist, da diese für die meisten Anwendungen weder benutzt noch betrachtet wird. Mit anderen Worten: Die Störsignale werden durch das erfindungsgemäße Verfahren in eine Empfangsrichtung "verschoben", in der sie im Hinblick auf die erwünschten Empfangsrichtungen am wenigsten schädliche Wirkung entfalten können.

Dieser Nebeneffekt der Verstärkung der Störsignale in dem Empfangsbereich der Vorformung kann vorteilhaft zur Störbefreiung eines Guard-Kanals, der bei vielen Mehrkanal-Empfängersystemen zur Identifikation und Verwerfung von fälschlichem Empfang aus Nebenkeulenrichtungen eingesetzt wird, dienen. Durch Nutzung der aus dem erfindungsgemäßen Verfahren anfallenden Informationen kann eine Störbefreiung des Guard-Kanals erreicht werden. Somit verbessert sich die Identifikation von Zielen aus Nebenkeulenrichtungen.

Soweit das Mehrkanal-Empfängersystem mit einem solchen Guard-Kanal zur Identifikation von Zielen aus Nebenkeulenrichtungen ausgestattet ist, kann zur Verbesserung und Störbefreiung des Guard-Kanals das folgende Verfahren angewendet werden.

Die ansonsten ungenutzte Keule in Störrichtung des Mehrkanal-Empfängersystems, in der sich die korrelierten Störsignale häufen bzw. maximal konstruktiv überlagern, wird berechnet. Anschließend werden die Signale der Empfangskeule, nach einer Normierung zum Signalpegel des Guard-Kanals, vom Guard-Signal abgezogen. Dies führt dazu, dass sich die Störsignale des Guard-Kanals aufheben und somit der Guard-Kanal entstört wird.

Die Erfindungen werden anhand konkreter Ausführungsbeispiele unter Bezugnahme auf Fig. 1 bis 9 näher erläutert:

Es zeigen:

Fig. 1 die Prinzipdarstellung eines Mehrkanal-Empfängersystem zur Durchführung des erfindungsgemäßen Verfahrens in schematischer Darstellung.

Fig. 2 eine konkrete Ausführung des Mehrkanal-Empfängersystem zur Durchführung des erfindungsgemäßen Verfahrens in schematischer Darstellung.

Fig. 3 ein vergrößerter Ausschnitt des Mehrkanal-Empfängersystems nach Fig. 2 zur Erläuterung des Kompensationsverfahrens am Beispiel von zwei Empfangskanälen.

Fig. 4 Frequenz-Spektren für Schwenkrichtung 0° ohne (A) und mit (B) Durchführung des erfindungsgemäßen Verfahrens.

Fig. 5 Frequenz-Spektren für Schwenkrichtung 15° ohne (A) und mit (B) Durchführung des erfindungsgemäßen Verfahrens.

Fig. 6 Frequenz-Spektren für Schwenkrichtung 30° ohne (A) und mit (B) Durchführung des erfindungsgemäßen Verfahrens.

Fig. 7 Frequenz-Spektren für Schwenkrichtung 45° ohne (A) und mit (B) Durchführung des erfindungsgemäßen Verfahrens.

Fig. 8 Frequenz-Spektren für Schwenkrichtung 60° ohne (A) und mit (B) Durchführung des erfindungsgemäßen Verfahrens.

Fig. 9 Frequenz-Spektren für die Korrektur eines Guard-Kanals bei Anwendung des erfindungsgemäßen Verfahrens.

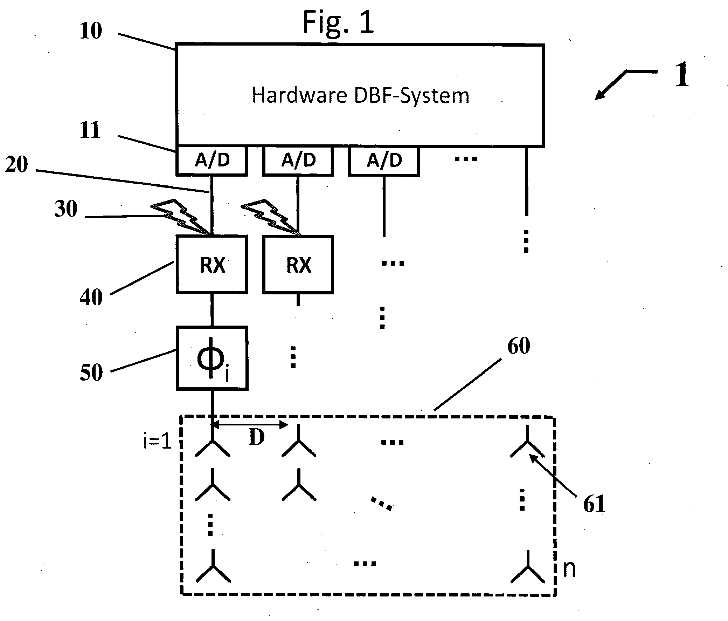

Fig. 1 zeigt schematisch den prinzipiellen Aufbau eines erfindungsgemäßen Mehrkanal-Empfängersystem 1. Es umfasst eine elektronische Verarbeitungseinheit 10 zur Durchführung des DBF mit vorgeschalteten Analog-/Digitalwandlern 11, den ersten Signalwegen 20 zwischen Analog-/Digitalwandlern 11 und Empfängern 40 und 11, den zweiten Signalwegen 50 mit definierten, individuellen Phasenverschiebungen $\phi_i$ zwischen Empfängern 40 und Empfangseinheiten 61, einem Empfangs-Array 60 (in Fig. 1 beispielhaft ausgebildet als 2-dimensionales Array) mit n Empfangseinheiten 61, i= 1,2,3, .....n (mit einem Abstand D zwischen den Empfangseinheiten 61, der konstant oder auch variabel sein kann).

Eine Empfangseinheit 61 kann z.B. als Antenne, Mikrophon etc. ausgebildet sein. Dabei kann eine Empfangseinheit 61 nur ein einziges derartiges Empfangselement umfassen oder alternativ auch eine Mehrzahl fest verdrahteter Empfangselemente umfassen. In den Empfängern 40 erfolgt im Fall von Radarsensoren als Empfangseinheiten 61 ein ein- oder mehrstufiger Mischprozess, der das (Empfangs-) Signal vom Nutzband in das Basisband transformiert.

Wenn Störsignale 30, d.h. Rauschen und / oder einzelne diskrete Störlinien durch Übersprechen aus anderen Baugruppen wie z. B. aus den Lokaloszillator-Signalen, Prozessoren oder Schaltnetzteilen, mit gleicher Phase in alle Empfangskanäle einkoppeln (d.h. im Bereich der Empfänger 40 sowie der ersten Signalwege 20), dann überlagern sich ohne Anwendung des erfindungsgemäßen Verfahrens diese im Beispiel bei einem Strahl mit Schwenkwinkel 0° (die typischerweise die Hauptempfangsrichtung eines Mehrkanalempfängersystems darstellt) alle konstruktiv und werden im gleichen Maß wie das Nutzsignal durch die Summation in der Verarbeitungseinheit 10 digital verstärkt mit negativen Folgen bezüglich des Signal-zu-Rausch-Verhältnisses.

Wie bereits im Detail beschrieben, gilt für ein erfindungsgemäßes Mehrkanal-Empfängersystem 1 mit Taper-Funktion die folgende Bedingung aus Gleichung (6a), (6b) für die in die zweiten Signalwege 50 einzubringenden Phasenverschiebungen $\phi_i$, die erfindungsgemäß umzusetzen ist.

$$\sum_{i=1}^{n} A_i \exp\big(jk_0(u_h x_i + v_h y_i + w_h z_i)\big) \exp(j\phi_i) \overset{!}{=} 0 \qquad (6a)$$

$$\left| \sum_{i=1}^{n} A_i \exp\big(jk_0(u_h x_i + v_h y_i + w_h z_i)\big) \exp(j\phi_i) \right| \overset{!}{=} \min. \qquad (6b)$$

Aus Gründen der Verständlichkeit ist als Beispiel die Hauptempfangsrichtung senkrecht zur Empfangsapertur, was einen häufig vorkommenden Fall darstellt, gewählt d.h. $u_h = 0$ und $v_h = 0$. Die Empfangseinheiten des Arrays liegen in einer Ebene, d.h. $z_i = 0$, somit wird die Gleichung 6a zur Gleichung 7 vereinfacht.

$$\sum_{i=1}^{n} A_i \exp(j\phi_i) = 0 \qquad (7)$$

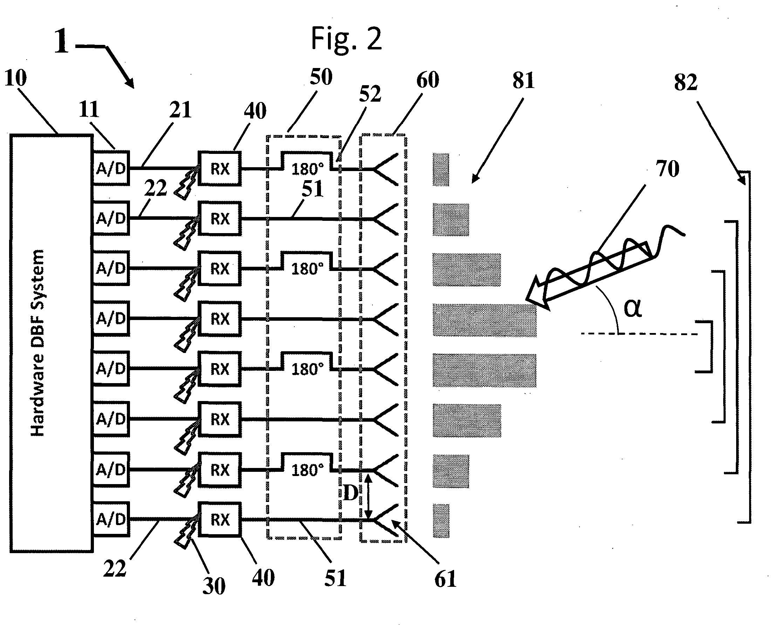

Ein konkretes Mehrkanal-Empfängersystem, mit der diese Bedingung erfüllt werden kann, ist in Fig. 2 gezeigt. Fig. 2 zeigt ein lineares (eindimensionales) Array mit einer geradzahligen Anzahl von Empfangskanälen (im gezeigten Fall 8 Empfangskanäle). Es umfasst 8 Empfangseinheiten 61 mit einer symmetrischen Amplitudenbelegung 81, d.h. $A_1 = A_n$, $A_2 = A_{n-1}$, ... usw., wobei einzelnen Paare 82 in Fig. 2 mit Klammern angedeutet sind. Für jeden Empfangskanal ist also ein weiterer Empfangskanal gleicher Amplitude vorhanden. Dies führt dazu, dass die Bedingung aus Gleichung 7 mit der Wahl von $\phi_i = 0$ für die Gesamtheit der zweiten Signalwege 51 mit ungeradzahligem i (d.h. Empfangskanal 1, 3, 5, 7) und $\phi_i = \pi$ (180°) für die Gesamtheit der zweiten Signalwege 52 mit geradzahligem i (d.h. Empfangskanal 2, 4, 6, 8) erfüllt wird, da die jeweils gleichen Amplituden einmal mit Vorfaktor 1 und einmal mit Vorfaktor -1 in der Gesamtsumme nach Gleichung 7 auftauchen.

In der gezeigten Ausführung der Fig. 2 existieren somit genauso viele Kanäle mit eingebrachter Phasenverschiebung (Signalwege 52) wie ohne Phasenverschiebung (Signalwege 51), die abwechselnd aufeinander folgen.

Im Ausführungsbeispiel nach Fig. 2 sind die zugehörigen Empfangseinheiten 61 der 8 Empfangskanäle im Abstand D = $\lambda$ / 2 ($\lambda$: Wellenlänge) angeordnet. Der erfindungsgemäße Ansatz kann jedoch ohne weiteres auf andere Array-Anordnungen wie z.B. 2D-Empfangsarrays übertragen werden.

Im Übrigen umfasst das erfindungsgemäße Mehrkanal-Empfängersystem 1 nach Fig. 2 die bereits aus Fig. 1 bekannten Elemente, insbesondere eine elektronische Verarbeitungseinheit 10 zur Durchführung des Digital Beamformings mit vorgeschalteten Analog-/Digitalwandlern 11, sowie die einzelnen Empfangskanäle mit Empfängern 40, Empfangseinheiten 61 sowie den ersten Signalwegen 21, 22 zwischen Analog-/Digitalwandlern 11 und Empfänger 40 .

Durch die definierte Phasenverschiebung, die in den zweiten Signalweg 52 zwischen Empfangseinheit 61 und Empfänger 40 im konkreten Beispiel eines jeden zweiten Empfangskanals eingebracht wird, erfolgt eine gezielte Vorformung der Richtcharakteristik / Empfangskeule des Mehrkanal-Empfängersystems in einen Empfangsbereich, welcher nicht der Hauptempfangsrichtung (z.B. bei einem Schwenkwinkel von 0°) größter Empfindlichkeit des Mehrkanal-Empfängersystems 1 entspricht. Ohne Korrektur dieser Phasenverschiebung würde das Array 60 somit mit maximaler Empfindlichkeit aus diesem, durch die Vorformung sich ergebenden Bereich (oder Richtung) empfangen. Diese Richtung entspricht im vorliegenden Beispiel gerade einer Richtung von $\pm$90° zum Lot auf die Apertur des Mehrkanal-Empfängersystems (sogenannter Endfire-Beam).

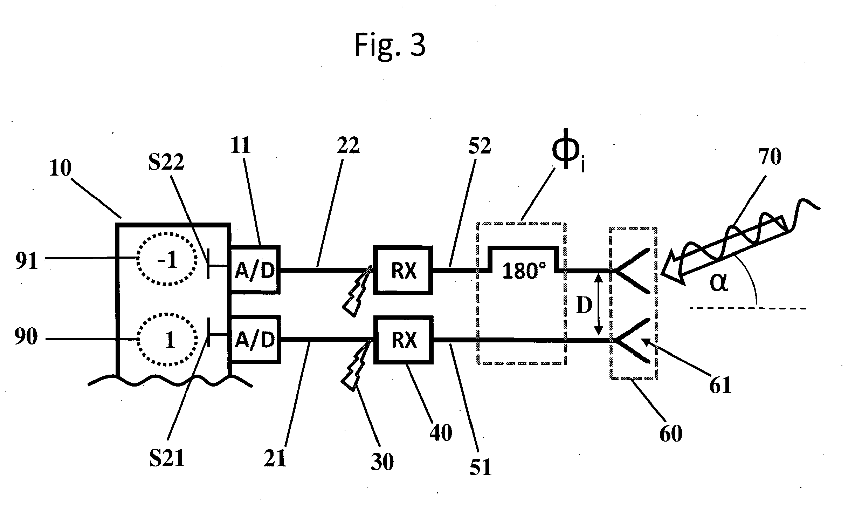

Die rechnerische Kompensation der durch die Phasenverschiebungen in den einzelnen Empfangskanälen erzeugten Vorformung erfolgt im Rahmen des Digital Beamforming, wie im Folgenden anhand von Fig. 3 erläutert. In Fig. 3 ist ein vergrößerter Ausschnitt des Mehrkanal-Empfängersystems 1 aus Fig. 2 mit 2 Empfangskanälen gezeigt, wobei dieser ein zugehöriges Paar mit und ohne Phasenverschiebung in den zweiten Signalwegen 51, 52 (beispielsweise ausgebildet als Signalleitungen) zeigt. Die Kompensation erfolgt, indem die digitalisierten Empfangssignale S21, S22 der ersten Signalwege 21, 22 der einzelnen Empfangskanäle abwechselnd mit +1 (Kanäle ohne Verzögerung) 90 bzw. -1 (für die Kanäle mit der eingebrachten Phasenverschiebung von 180°) 91 multipliziert werden, bevor diese aufsummiert werden. Die Umsetzung und Verarbeitung der Signale erfolgt digital in der Verarbeitungseinheit 10. Im Ergebnis entsteht wieder ein Strahl mit Hauptempfangsrichtung 0°, bei dem sich aber erfindungsgemäße die Rausch- und Störanteile zweier Kanäle jeweils gegeneinander aufheben.

Zwar ergibt sich als Nebeneffekt der erfindungsgemäßen Maßnahme eine Maximierung der Störsignale in der Schwenkrichtung von 90° (Endfire-Beam). Dies ist aber eine Richtung, in der in der Regel überhaupt keine Signale empfangen werden sollen. Im Ergebnis erfolgt also eine Verschiebung der Störsignale aus der Hauptempfangsrichtung des Mehrkanalempfängersystems in einen für die Praxis unbedeutenden Bereich bzw. Richtung.

Im Folgenden werden die Resultate sowie vorteilhaften Wirkungen des erfindungsgemäßen Verfahrens an Hand von simulierten Frequenz-Spektren der Empfangssignale 70 nach Durchführung des Digital Beamformings erläutert. Im simulierten Beispiel wird als Nutzsignal 70 ein Sinussignal mit Amplitude 1 in der Mitte eines beliebigen Frequenzbandes angenommen, das aus einer bestimmten Richtung unter dem Winkel $\alpha$ auf das Empfangs-Array 60 einfällt. Das zugrunde liegende Mehrkanal-Empfängersystem weist 16 Empfangskanäle und entsprechend zugeordnete Empfangseinheiten im Abstand D= $\lambda$/2 auf, wobei bei der Hälfte der Empfangskanäle (in beliebiger Auswahl) eine Phasenverschiebung $\pi$ eingebracht wurde.

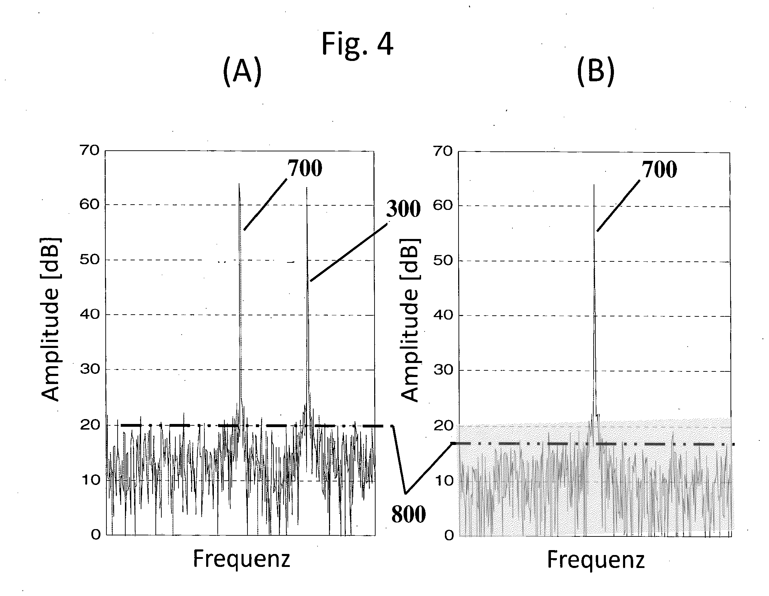

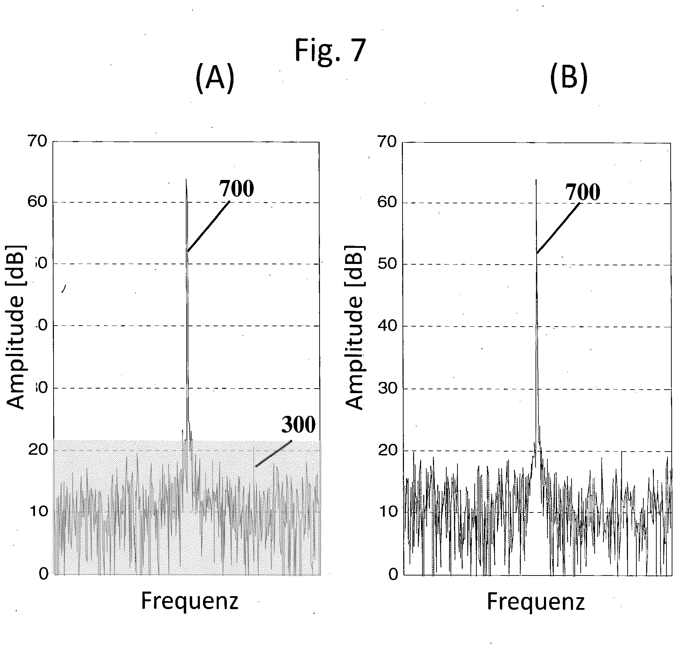

Basis für die Spektren in den Figuren 4 bis 9 bildet ein Störsignal 30 (Fig. 2) in Form einer diskreten Störlinie, die mit höherer Frequenz und gleicher Phase und jeweils gleicher Amplitude bezogen auf das Nutzsignal in alle Empfangskanäle zwischen Empfänger 40 und Signalwege 21, 22 eingeprägt wird (beispielsweise herrührend aus anderen Baugruppen des Mehrkanal-Empfängersystems 1). Darüber hinaus wird den simulierten Daten Rauschen aufgeprägt. Als Rauschamplitude wurde im erläuterten Beispiel 0,1 für einen unkorrelierten Rauschanteil (z.B. Eigenrauschen der Empfänger 40) und 0,03 für einen korrelierten Rauschanteil, der den Empfängern 40 von außen gleichphasig eingeprägt wird, gewählt. Der korrelierte Rauschanteil bildet eine zweite Komponente des Störsignals 30, welche mit Hilfe des erfindungsgemäßen Verfahrens reduziert werden kann.

Die Figuren 4 bis 9 zeigen in den Bildteilen (A) Spektren erzeugt mit einem Verfahren gemäß Stand der Technik und in den Bildteilen (B) Spektren bei Anwendung der Erfindung.

Ohne Anwendung des erfindungsgemäßen Verfahrens ist das Störsignal in der DBF-Keule mit Schwenkrichtung 0° als unerwünschte Linie 300 mit gleicher Amplitude wie das Nutzsignal 700 sichtbar (Fig. 4A). Bei Anwendung des erfindungsgemäßen Verfahrens wird das Störsignal beim DBF mit den alternierenden Verzögerungen beaufschlagt, so dass es für die Schwenkrichtung 0° perfekt unterdrückt wird (Fig. 4B). Zudem erkennt man beim Vergleich der Spektren von Fig. 4A und 4B die allgemeine Absenkung des Rauschpegels 800 um etwa 3,8 dB.

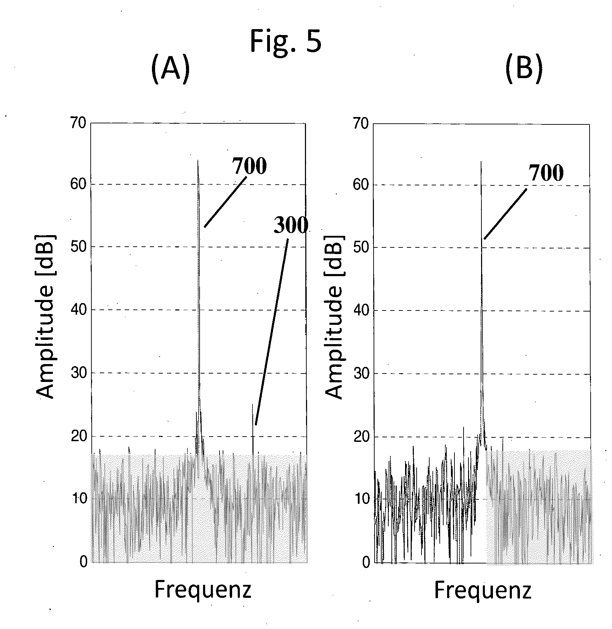

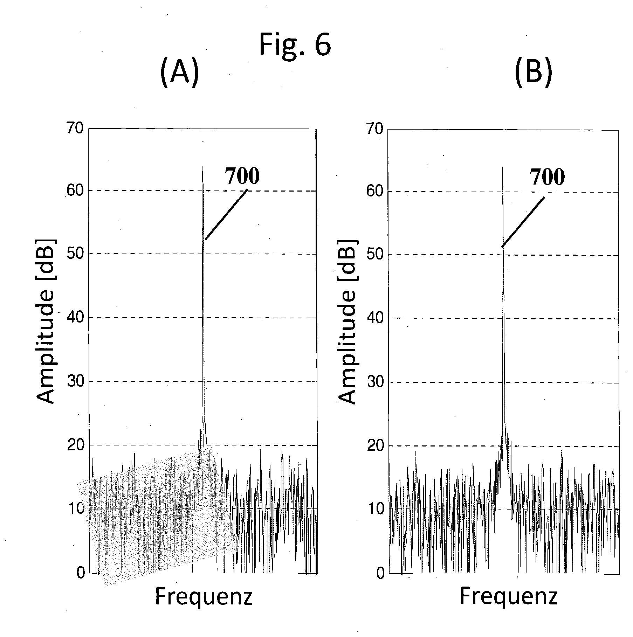

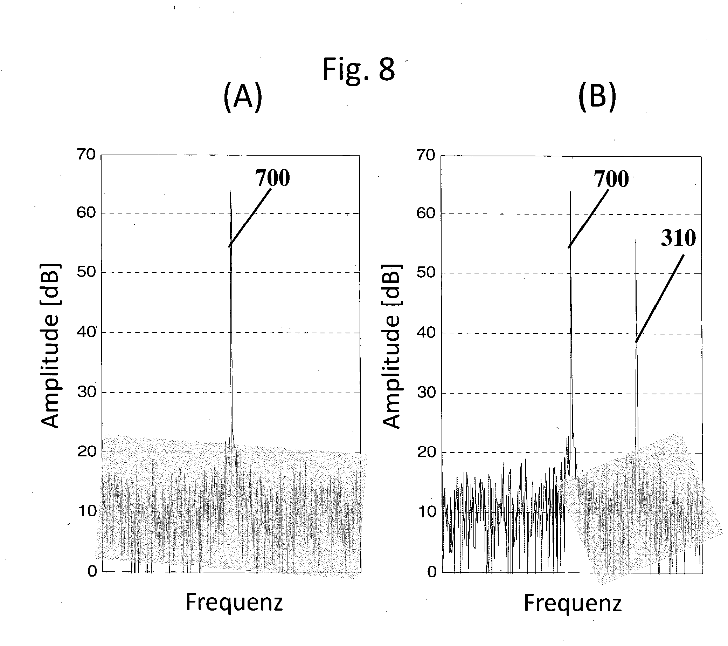

Bei Betrachtung der Störlinie (allgemein für breitbandiges Rauschen oder mehrere Störlinien) ohne Anwendung des Verfahrens erkennt man im Vergleich der Figuren 4A bis 8A, dass die Störlinie unter 0° Blickrichtung am stärksten ausgeprägt ist. Unter 15° (Fig. 5A) ist sie weitaus schwächer, für höhere Schwenkwinkel $\alpha$ überhaupt nicht zu sehen (Fig. 6A bis 8A). Mit Anwendung des erfindungsgemäßen Verfahrens (Figuren 4B bis 8B) ist die Linie für alle Schwenkwinkel bis 45° vollständig unterdrückt. Für den hohen Schwenkwinkel von 60° (Fig. 8B) tritt die Störlinie 310 wieder auf, allerdings um 8,3 dB unterdrückt. Da der Hauptbeitrag der Störlinie auf die Schwenkrichtung 90° geschoben wurde (Spektrum nicht dargestellt), treten für hohe Schwenkwinkel Nebenkeulenanteile dieses Endfire-Beams auf. Dieser Effekt wird aber für größere Arrays geringer, da bei einem größeren Array auch dessen Richtwirkung steigt. Verdoppelt man z.B. bei gleichem Empfangseinheitenabstand die Anzahl der Kanäle auf 32, dann ist die Störlinie 310 (Fig. 8B) der Nebenkeule auch unter 60° perfekt unterdrückt.

Allgemein führt das erfindungsgemäße Verfahren auch zu einer Reduzierung des Rauschens in den gewünschten Empfangsrichtungen, indem korrelierte Rauschanteile in Richtung (bzw. den Bereich) des Endfire-Beams verschoben werden. Wie in den Figuren 4A und 4B zu erkennen, wird der Rauschpegel 800 für den ungeschwenkten Strahl signifikant gesenkt.

Zur Unterdrückung von Falschzielen bzw. Fehldetektionen wird in gattungsgemäßen Mehrkanal-Empfängersystemen wie z.B. in einem Radarsystem, häufig ein zusätzlicher Empfangskanal, ein sogenannter Guard-Kanal, eingesetzt, der das Signal einer Empfangseinheit z.B. einer Antenne mit weitem Öffnungswinkel, empfängt. Er dient dazu, fälschlichen Empfang aus Nebenkeulenrichtungen zu identifizieren und ggf. zu verwerfen. Dies entspricht einer sogenannten Guard-Funktion.

Dieser Empfangskanal kann mit denselben Störsignalen 30 behaftet sein wie die Empfangskanäle des Antennen-Arrays 60. Eine Störbefreiung des Guard-Kanals kann mit Hilfe des erfindungsgemäßen Verfahrens bei der Nutzung der erfindungsgemäßen Vorrichtung rechnerisch bewerkstelligt werden. Hierzu wird die ansonsten ungenutzte Keule des Mehrkanal-Empfängersystem 1 in "Störrichtung" (also in die durch die Vorformung der Empfangskeule definierte Richtung) berechnet, welche die Störsignale mit maximaler Amplitude, aber keine echten Ziele enthält.

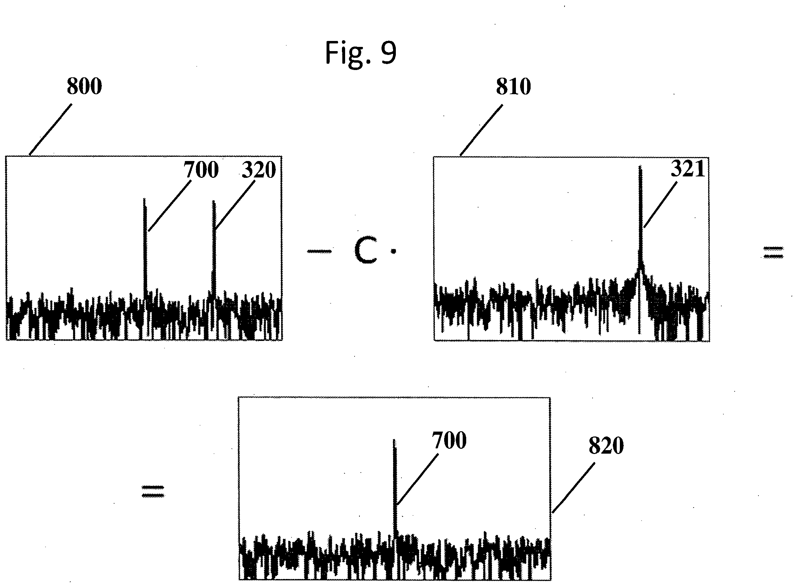

Fig. 9 zeigt die Vorgehensweise. Das Spektrum 800 des Guard-Kanals enthält ein echtes Ziel 700 sowie eine Störlinie 320. Das Spektrum der Störrichtungskeule 810 enthält dagegen nur eine der Störlinie 320 des Guard-Kanals entsprechende Störlinie 321.

Anschließend werden die Signale der Störrichtungskeule 810 nach einer Normierung zum Signalpegel des Guard-Kanals, vom Guard-Signal 800 abgezogen, wodurch die Störlinien 320 eliminiert und somit der Guard-Kanal entstört wird.

Letztlich bleibt insgesamt ein echter Peak 700 des Signals im korrigierten Frequenzspektrum 820 des Guard-Kanals übrig, der ein reales Ziel z.B. ein Flugzeug darstellt. Die Normierung der korrelierten Störsignale der ungenutzten Keule des Empfängersystems erfolgt rechnerisch durch Multiplikation dieser mit einem Vorfaktor C. Mit dem Vorfaktor wird die Normierung der Störlinie 321 zur Störlinie 320 erreicht, da die Störlinie 321 den Gewinn der DBF-Prozessierung beinhaltet (d.h. einer Verstärkung im Rahmen des DBF System unterliegt).

**Patentansprüche**

1. Verfahren zur Reduktion von korreliert in den Empfangskanälen eines Mehrkanal-Empfängersystems vorhandenen Störsignalen in einer Hauptempfangsrichtung, wobei

   - die Empfangskanäle des Mehrkanal-Empfängersystems jeweils eine Empfangseinheit, einen Empfänger sowie einem Analog / Digitalwandler umfassen, und
   - das Mehrkanal-Empfängersystem zur Durchführung eines Digital Beamformings auf der Basis der in den einzelnen Empfangskanälen empfangenen und digitalisierten Signalen eingerichtet ist, und
   - das Mehrkanal-Empfängersystem nach Anwendung des Digital Beamformings eine definierte Richtcharakteristik mit der Hauptempfangsrichtung größter Empfindlichkeit aufweist,

   **dadurch gekennzeichnet, dass** eine gezielte Vorformung der Richtcharakteristik des Mehrkanal-Empfängersystems (1) in einen anderen Empfangsbereich vorgenommen wird, welcher nicht der vorgenannten Hauptempfangsrichtung des Mehrkanal-Empfängersystems (1) entspricht, und zwar durch Einbringen definierter Phasenverschiebungen in die einzelnen Empfangskanäle zwischen Empfangseinheit (61) und Empfänger (40), wobei die Phasenverschiebungen derart gewählt werden, dass sich beim Rückgängigmachen der vorgenommenen Vorformung im anschließenden Digital Beamforming die korrelierten Störsignale (30) der einzelnen Empfangskanäle in der Hauptempfangsrichtung maximal destruktiv überlagern, so dass die Störsignale in der Hauptempfangsrichtung eliminiert werden,
   und wobei die korrelierten Störsignale gleichermaßen in die Empfänger einkoppeln, ohne die definierten Phasenverschiebungen zu erfahren,
   und wobei die Vorformung der Richtcharakteristik sich aus nachfolgender Bedingung für die Phasenverschiebungen $\phi_i$ in den einzelnen Empfangskanälen ergibt:

   $$\left| \sum_{i=1}^{n} A_i \exp\big(jk_0(u_h x_i + v_h y_i + w_h z_i)\big) \exp(j\phi_i) \right| \overset{!}{=} \min.$$

   mit

   - $i = 1,\dots n$ laufende Nr. der Empfangskanäle mit n: Anzahl der Empfangskanäle
   - $A_i$ Amplitude des i-ten Empfangskanals
   - j imaginäre Einheit
   - $k_0$ Wellenzahl ($k_0 = 2\pi/\lambda$; $\lambda$ = Wellenlänge)
   - $u_h, v_h$ Einfallsrichtung der Empfangseinheiten (61) eines bestimmten im DBF geformten Strahls, der Hauptstrahlrichtung
   - $x_i$, $y_i$, $z_i$ kartesische Koordinaten der einzelnen Empfangseinheiten (61)
   - $\phi_i$ Phasenverschiebung des i-ten Empfangskanals
   -

   $$w_h = (1 - u_h^2 - v_h^2)^{1/2}.$$

2. Verfahren nach Anspruch 1, **dadurch gekennzeichnet, dass** eine Empfangseinheit (61) ein einzelnes Empfangselement oder eine Mehrzahl von fest verschalteten Empfangselementen umfasst.

3. Verfahren nach Anspruch 1 oder 2, **dadurch gekennzeichnet, dass** die Erzeugung der Phasenverschiebungen zur Vorformung der Richtcharakteristik durch eine definierte Verlängerung der Signalwege in den Empfangskanälen erfolgt.

4. Verfahren nach Anspruch 3, **dadurch gekennzeichnet, dass** die Vorformung der Richtcharakteristik bei einer Anordnung der Empfangseinheiten in einer Ebene sowie einer Hauptempfangsrichtung senkrecht zu dieser Ebene sich aus der nachfolgenden Bedingung für $\phi_i$ ergibt:

$$\sum_{i=1}^{n} A_i \exp(j\phi_i) = 0$$

mit

- $i = 1,...\ n$ laufende Nr. der Empfangskanäle mit n: Anzahl der Empfangskanäle
- $A_i$ Amplitude des i-ten Empfangskanals
- j imaginäre Einheit
- $\phi_i$ Phasenverschiebung des i-ten Empfangskanals

5. Verfahren nach Anspruch 4, **dadurch gekennzeichnet, dass** bei einer Amplitudenbelegung der einzelnen Empfangskanäle zur Unterdrückung von Nebenkeulen die Phasenverschiebungen $\phi_i$ bei einer symmetrischen Taper-Funktion $A_1 = A_n$, $A_2 = A_{n-1}$, ... usw. und einer geraden Anzahl an Empfangseinheiten (61) für ungeradzahliges i $\phi_i$ = $\phi_1$ und für geradzahliges i $\phi_i = \phi_2$ betragen, wobei gilt $\phi_1 - \phi_2 = \pm\ \pi$.

6. Verfahren nach einem der vorangehenden Ansprüche, **dadurch gekennzeichnet, dass** der Abstand (D) der Empfangseinheiten (61) $\lambda\ /\ 2$ beträgt.

7. Verfahren nach einem der vorangehenden Ansprüche **dadurch gekennzeichnet, dass** die in dem durch Vorformung der Richtcharakteristik erzeugten Empfangsbereich vorhandenen Störsignale ermittelt werden und zur Korrektur eines Guard-Kanals des Mehrkanal-Empfängersystems (1), welcher zur Identifikation von Zielen aus Nebenkeulenrichtungen dient, eingesetzt werden.

8. Mehrkanal-Empfängersystems mit optimierter Unterdrückung von korreliert in den Empfangskanälen vorhandenen Störsignalen in einer Hauptempfangsrichtung, welches

- mehrere Empfangskanäle mit jeweils einer Empfangseinheit (61), einem Empfänger (40) sowie einem Analog / Digitalwandler (11), und
- eine Verarbeitungseinheit (10) zur Durchführung eines digitalen Beamformings auf der Basis der in den einzelnen Empfangskanälen empfangenen und digitalisierten Signalen, und,
- eine definierte Richtcharakteristik mit der Hauptempfangsrichtung größter Empfindlichkeit nach Anwendung des Digital Beamformings, aufweist

**dadurch gekennzeichnet, dass** das Mehrkanal-Empfängersystem (1) derart ausgebildet ist, eine gezielte Vorformung der Richtcharakteristik des Empfängersystems in einen anderen Empfangsbereich zu bewirken, welcher nicht der vorgenannten Hauptempfangsrichtung entspricht, und zwar durch Einbringen definierter Phasenverschiebungen in den einzelnen Empfangskanälen zwischen Empfangseinheit (61) und Empfänger (40), wobei die Verarbeitungseinheit eingerichtet ist, die vorgenommene Vorformung im Digital Beamforming wieder rückgängig zu machen, und wobei die Phasenverschiebungen in den einzelnen Empfangskanälen derart gewählt sind, dass sich im Digital Beamforming bei der Rückgängigmachung der Vorformung die korrelierten Störsignale (30) der einzelnen Empfangskanäle in der Hauptempfangsrichtung maximal destruktiv überlagern, so dass die Störsignale in der Hauptempfangsrichtung eliminiert werden, und wobei die korrelierten Störsignale gleichermaßen in die Empfänger einkoppeln, ohne die definierten Phasenverschiebungen zu erfahren, und wobei die Vorformung der Richtcharakteristik sich aus nachfolgender Bedingung für die Phasenverschiebungen $\phi_i$ in den einzelnen Empfangskanälen ergibt:

$$\left| \sum_{i=1}^{n} A_i \exp\left(jk_0(u_h x_i + v_h y_i + w_h z_i)\right) \exp(j\phi_i) \right| \overset{!}{=} \min.$$

mit

- $i = 1,... n$ laufende Nummer der Empfangskanäle mit n: Anzahl der Empfangskanäle
- $A_i$ Amplitude des i-ten Empfangskanals
- j imaginäre Einheit
- $k_0$ Wellenzahl ($k_0 = 2\pi/\lambda$; $\lambda$ = Wellenlänge)
- $u_h, v_h$ Einfallsrichtung der Empfangseinheiten (61) eines bestimmten im DBF geformten Strahls, der Hauptstrahlrichtung
- $x_i$, $y_i$, $z_i$ kartesische Koordinaten der einzelnen Empfangseinheiten (61)
- $\phi_i$ Phasenverschiebung des i-ten Empfangskanals
- 

$$w_h = (1 - u_h^2 - v_h^2)^{1/2}.$$

9. Mehrkanal-Empfängersystem nach Anspruch 9, **dadurch gekennzeichnet, dass** eine Empfangseinheit (61) ein einzelnes Empfangselement oder eine Mehrzahl von fest verschalteten Empfangselementen umfasst.

10. Mehrkanal-Empfängersystem nach einem der vorangehenden Ansprüche, **dadurch gekennzeichnet, dass** zur Erzeugung einer definierten Phasenverschiebungen $\phi_i$ in den Empfangskanälen zwei unterschiedliche Signalkabellängen zwischen Empfangseinheiten (61) und Empfänger (40) vorhanden sind.

11. Mehrkanal-Empfängersystem nach einem der Ansprüche 8 bis 10, **dadurch gekennzeichnet, dass** es einen Guard-Kanal zur Identifikation von Zielen aus Nebenkeulenrichtungen aufweist, und eingerichtet ist, die in dem durch Vorformung der Richtcharakteristik erzeugten Empfangsbereich vorhandenen Störsignale zu ermitteln und diese zur Korrektur des Guard-Kanals einzusetzen.

**Claims**

1. Method for reducing interference signals present in a correlated manner in the receiving channels of a multi-channel receiver system in a main receiving direction,

   - the receiving channels of the multi-channel receiver system each comprising a receiving unit, a receiver and an analog/digital converter, and
   - the multi-channel receiver system being configured to carry out digital beamforming based on the signals which are received and digitized in the individual receiving channels, and
   - the multi-channel receiver system, after application of the digital beamforming, having a defined directional characteristic with the main receiving direction that has the greatest sensitivity,

      **characterized in that** targeted pre-shaping of the directional characteristic of the multi-channel receiver system (1) into another reception range is performed, which range does not correspond to the aforementioned main receiving direction of the multi-channel receiver system (1), specifically by introducing defined phase shifts into the individual receiving channels between the receiving unit (61) and the receiver (40), the phase shifts being selected such that when the performed pre-shaping is reversed in subsequent digital beamforming, the correlated interference signals (30) of the individual receiving channels in the main receiving direction are superimposed in a maximally destructive manner so that the interference signals are eliminated in the main receiving direction,
      the correlated interference signals being coupled into the receivers equally, without undergoing the defined phase shifts,
      and the pre-shaping of the directional characteristic resulting from the following condition for the phase shifts $\Phi_i$ in the individual receiving channels:

$$\left| \sum_{i=1}^{n} A_i \exp\big(jk_0(u_h x_i + v_h y_i + w_h z_i)\big) \exp(j\phi_i) \right| \overset{!}{=} \min.$$

where

- $i = 1,...\,n$ sequential number of the receiving channels, where n: number of receiving channels
- $A_i$ amplitude of the i-th receiving channel
- j imaginary unit
- $k_0$ wave number ($k_0 = 2\pi/\lambda$; $\lambda$ = wavelength)
- $u_h, v_h$ direction of incidence of the receiving units (61) of a specific beam formed in the DBF, of the main beam direction
- $x_i, y_i, z_i$ Cartesian coordinates of the individual receiving units (61)
- $\phi_i$ phase shift of the i-th receiving channel
-

$$w_h = (1 - u_h{}^2 - v_h{}^2)^{1/2}.$$

2. Method according to claim 1, **characterized in that** a receiving unit (61) comprises a single receiving element or a plurality of fixedly connected receiving elements.

3. Method according to either claim 1 or claim 2, **characterized in that** the generation of the phase shifts for pre-shaping the directional characteristic is performed by a defined extension of the signal paths in the receiving channels.

4. Method according to claim 3, **characterized in that,** in the case of an arrangement of the receiving units in a plane and of a main receiving direction perpendicular to said plane, the pre-shaping of the directional characteristic results from the following condition for $\Phi_i$:

$$\sum_{i=1}^{n} A_i \exp(j\phi_i) = 0$$

where

- $i = 1,...\,n$ sequential number of the receiving channels, where n: number of receiving channels
- $A_i$ amplitude of the i-th receiving channel
- j imaginary unit
- $\Phi_i$ phase shift of the i-th receiving channel

5. Method according to claim 4, **characterized in that,** in an amplitude distribution of the individual receiving channels for suppressing side lobes, in the case of a symmetrical taper function $A_1 = A_n$, $A_2 = A_{n-1}$, etc. and an even number of receiving units (61), the phase shifts $\Phi_i$ are $\Phi_i = \Phi_1$ if i is odd, and i $\Phi_i = \Phi_2$ if i is even, where $\Phi_1 - \Phi_2 = \pm\pi$.

6. Method according to any of the preceding claims, **characterized in that** the distance (D) between the receiving units (61) is $\lambda/2$.

7. Method according to any of the preceding claims, **characterized in that** the interference signals present in the reception range generated by pre-shaping the directional characteristic are detected and used to correct a guard channel of the multi-channel receiver system (1), which is used to identify targets from side lobe directions.

8. Multi-channel receiver system with optimized suppression of interference signals present in a correlated manner in the receiving channels in a main receiving direction, which system comprises

- a plurality of receiving channels which each have a receiving unit (61), a receiver (40) and an analog/digital converter (11), and
- a processing unit (10) for carrying out digital beamforming based on the signals which are received and digitized in the individual receiving channels, and
- a defined directional characteristic with the main receiving direction that has the greatest sensitivity after application of the digital beamforming,

**characterized in that** the multi-channel receiver system (1) is designed to bring about targeted pre-shaping of the directional characteristic of the receiver system into another reception range, which does not correspond to the aforementioned main receiving direction, specifically by introducing defined phase shifts in the individual receiving channels between the receiving unit (61) and the receiver (40), the processing unit being configured to reverse the performed pre-shaping in the digital beamforming, and the phase shifts in the individual receiving channels being selected such that in the digital beamforming, when the pre-shaping is reversed, the correlated interference signals (30) of the individual receiving channels in the main receiving direction are superimposed in a maximally destructive manner so that the interference signals are eliminated in the main receiving direction, the correlated interference signals being coupled into the receivers equally, without undergoing the defined phase shifts,

and the pre-shaping of the directional characteristic resulting from the following condition for the phase shifts $\Phi_i$ in the individual receiving channels:

$$\left| \sum_{i=1}^{n} A_i \exp\left(jk_0(u_h x_i + v_h y_i + w_h z_i)\right) \exp(j\phi_i) \right| \overset{!}{=} \min.$$

where

- i = 1,... n sequential number of the receiving channels, where n: number of receiving channels
- $A_i$ amplitude of the i-th receiving channel
- j imaginary unit
- $k_0$ wave number ($k_0 = 2\pi/\lambda$; $\lambda$ = wavelength)
- $u_h, v_h$ direction of incidence of the receiving units (61) of a specific beam formed in the DBF, of the main beam direction
- $x_i$, $y_i$, $z_i$ Cartesian coordinates of the individual receiving units (61)
- $\Phi_i$ phase shift of the i-th receiving channel
- 

$$w_h = \left(1 - u_h^2 - v_h^2\right)^{1/2}.$$

9. Multi-channel receiver system according to claim 9, **characterized in that** a receiving unit (61) comprises a single receiving element or a plurality of fixedly connected receiving elements.

10. Multi-channel receiver system according to any of the preceding claims, **characterized in that,** in order to generate a defined phase shifts $\Phi_i$ in the receiving channels, two different signal cable lengths are present between the receiving units (61) and the receivers (40).

11. Multi-channel receiver system according to any of claims 8 to 10, **characterized in that** the system has a guard channel for identifying targets from side lobe directions, and is configured to detect the interference signals present in the reception range generated by pre-shaping the directional characteristic and to use them to correct the guard channel.

**Revendications**

1. Procédé de réduction de signaux d'interférence présents en corrélation dans les canaux de réception d'un système de récepteur multicanal dans une direction de réception principale, dans lequel

- les canaux de réception du système de récepteur multicanal comprennent chacun une unité de réception, un récepteur et un convertisseur analogique/numérique, et
- le système de récepteur multicanal est configuré pour réaliser une formation numérique de faisceaux sur la base des signaux reçus et numérisés dans les canaux de réception individuels, et
- le système de récepteur multicanal présente, après l'application de la formation numérique de faisceaux, une caractéristique directionnelle définie ayant la direction de réception principale la plus sensible,

**caractérisé en ce qu'**un préformage ciblé de la caractéristique directionnelle du système de récepteur multicanal (1) est effectué dans une zone de réception différente, qui ne correspond pas à la direction de réception principale susmentionnée du système de récepteur multicanal (1), notamment en introduisant des déphasages définis dans les différents canaux de réception entre l'unité de réception (61) et le récepteur (40), dans lequel les déphasages sont sélectionnés de telle sorte que, lors de l'annulation du préformage effectué lors de la formation numérique de signaux qui suit, les signaux d'interférence (30) corrélés des différents canaux de réception se superposent de manière destructive au maximum dans la direction de réception principale, de telle sorte que les signaux d'interférence dans la direction de réception principale sont éliminés,
et dans lequel les signaux d'interférence corrélés sont couplés uniformément dans les récepteurs sans subir les déphasages définis,
et dans lequel le préformage de la caractéristique directionnelle résulte de la condition suivante pour les déphasages $\Phi_i$ dans les différents canaux de réception :

$$\left| \sum_{i=1}^{n} A_i \exp\left(jk_0(u_h x_i + v_h y_i + w_h z_i)\right) \exp(j\phi_i) \right| \overset{!}{=} \min.$$

où

- $i = 1,...\ n$ numéros séquentiels des canaux de réception avec n : nombre des canaux de réception
- $A_i$ est l'amplitude du i-ième canal de réception
- j est une unité imaginaire
- $k_0$ est le numéro d'onde $(k_0 = 2\pi/\lambda$ ; $\lambda$ = longueur d'onde)
- $u_h, v_h$ représentent la direction d'incidence des unités de réception (61) d'un faisceau spécifique formé dans le DBF, de la direction principale d'émission de faisceaux
- $x_i, y_i, z_i$ représentent les coordonnées cartésiennes des différentes unités de réception (61)
- $\Phi_i$ représente le déphasage du i-ième canal de réception
-

$$w_h = \left(1 - u_h{}^2 - v_h{}^2\right)^{1/2}.$$

2. Procédé selon la revendication 1, **caractérisé en ce qu'**une unité de réception (61) comprend un seul élément de réception ou une pluralité d'éléments de réception connectés de manière permanente.

3. Procédé selon la revendication 1 ou 2, **caractérisé en ce que** les déphasages sont générés pour le préformage de la caractéristique directionnelle par une extension définie des chemins de signaux dans les canaux de réception.

4. Procédé selon la revendication 3, **caractérisé en ce que** le préformage de la caractéristique directionnelle lorsque les unités de réception sont disposées dans un plan et dans une direction principale de réception perpendiculaire à ce plan résulte de la condition suivante pour $\Phi_i$ :

$$\sum_{i=1}^{n} A_i \exp(j\phi_i) = 0$$

où

- i = 1,... n numéros séquentiels des canaux de réception avec n : nombre des canaux de réception
- $A_i$ est l'amplitude du i-ième canal de réception
- j est une unité imaginaire
- $\Phi_i$ représente le déphasage du i-ième canal de réception

5. Procédé selon la revendication 4, **caractérisé en ce que,** lorsque des amplitudes des différents canaux de réception sont attribuées pour supprimer des lobes secondaires, les déphasages $\Phi_i$ sont de $A_1 = A_n$, $A_2 = A_{n-1}$, etc. pour une fonction conique symétrique et un nombre impair i $\Phi_i = \Phi_1$ et un nombre pair i $\Phi_i = \Phi_2$ pour un nombre pair d'unités de réception (61), où la formule $\Phi_1 - \Phi_2 = \pm \pi$ s'applique.

6. Procédé selon l'une des revendications précédentes, **caractérisé en ce que** la distance (D) entre les unités de réception (61) est de $\lambda/2$.

7. Procédé selon l'une des revendications précédentes, **caractérisé en ce que** les signaux d'interférence présents dans la zone de réception générée par préformage de la caractéristique directionnelle sont déterminés et utilisés pour corriger un canal de garde du système de récepteur multicanal (1), lequel sert à l'identification de cibles à partir de directions de lobes secondaires.

8. Système de récepteur multicanal avec suppression optimisée de signaux d'interférence présents en corrélation dans les canaux de réception dans une direction de réception principale, lequel système présente

- une pluralité de canaux de réception, chacun comportant une unité de réception (61), un récepteur (40) et un convertisseur analogique/numérique (11), et
- une unité de traitement (10) permettant d'effectuer une formation numérique de faisceaux sur la base des signaux reçus et numérisés dans les canaux de réception individuels, et,
- une caractéristique directionnelle définie ayant la direction de réception principale la plus sensible, après l'application de la formation numérique de faisceaux

**caractérisé en ce que** le système de récepteur multicanal (1) est conçu de manière à réaliser un préformage ciblé de la caractéristique directionnelle du système de récepteur dans une zone de réception différente qui ne correspond pas à la direction de réception principale mentionnée ci-dessus, notamment en introduisant des déphasages définis dans les canaux de réception individuels entre l'unité de réception (61) et le récepteur (40), dans lequel l'unité de traitement est configurée pour annuler le préformage effectué lors de la formation numérique de faisceaux, et dans lequel les déphasages dans les canaux de réception individuels sont sélectionnés de telle sorte que, lors de l'annulation du préformage, les signaux d'interférence (30) corrélés des différents canaux de réception se superposent de manière destructive au maximum dans la direction de réception principale, lors de la formation numérique de signaux, de telle sorte que les signaux d'interférence dans la direction de réception principale sont éliminés, et dans lequel les signaux d'interférence corrélés sont couplés uniformément dans le récepteur sans subir les déphasages définis, et dans lequel le préformage de la caractéristique directionnelle résulte de la condition suivante pour les déphasages $\Phi_i$ dans les différents canaux de réception :

$$\left| \sum_{i=1}^{n} A_i \exp\big(j k_0 (u_h x_i + v_h y_i + w_h z_i)\big) \exp(j\phi_i) \right| \overset{!}{=} \min.$$

où

- i = 1,... n numéros séquentiels des canaux de réception avec n : nombre des canaux de réception
- $A_i$ est l'amplitude du i-ième canal de réception
- j est une unité imaginaire
- $k_0$ est le numéro d'onde $(k_0 = 2\pi/\lambda \,;\, \lambda = $ longueur d'onde)
- $u_h, v_h$ représentent la direction d'incidence des unités de réception (61) d'un faisceau spécifique formé dans le DBF, de la direction principale d'émission de faisceaux

• $x_i$, $y_i$, $z_i$ représentent les coordonnées cartésiennes des différentes unités de réception (61)
• $\Phi_i$ représente le déphasage du i-ième canal de réception
•

$$w_h = \left(1 - u_h^2 - v_h^2\right)^{1/2}.$$

9. Système de récepteur multicanal selon la revendication 9,
**caractérisé en ce qu'**une unité de réception (61) comprend un seul élément de réception ou une pluralité d'éléments de réception connectés de manière permanente.

10. Système de récepteur multicanal selon l'une des revendications précédentes, **caractérisé en ce que,** pour générer un déphasage défini $\Phi_i$, il existe, dans les canaux de réception, deux longueurs de câble de signal différentes entre les unités de réception (61) et le récepteur (40).

11. Système de récepteur multicanal selon l'une des revendications 8 à 10, **caractérisé en ce qu'**il présente un canal de garde pour l'identification de cibles à partir des directions de lobes secondaires et est configuré pour déterminer les signaux d'interférence présents dans la zone de réception générée par préformage de la caractéristique directionnelle et pour utiliser ces signaux afin de corriger le canal de garde.

## Fig. 1

EP 3 082 273 B1

Fig. 2

Fig. 3

Fig. 4

(A)                          (B)

Fig. 5

(A)

(B)

Fig. 6

(B)

(A)

Fig. 7

(A)        (B)

# Fig. 8

(A)

(B)

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69932350 T2, Daniel Rabinkin
- EP 1233542 A1

**In der Beschreibung aufgeführte Nicht-Patentliteratur**

- Two decades of array signal processing research: the parametric approach. **KRIM ; HAMID ; MATS VIBERG.** Signal Processing Magazine. IEEE, 1996, vol. 13.4, 67-94
- **DANIEL J. RABIDEAU.** *Front End Non-Linear Distortion and Array Beam Forming*
- **HOWARD, L. C.** *Hybrid Mitigation of Distortion in Digital Arrays*
- **KEIR C. LAURITZEN et al.** *Impact of Decorrelation Techniques on Sampling Noise in Radio-Frequency Applications*